# EUROPÄISCHE PATENTSCHRIFT

(11) **EP 2 684 824 B1**
(45) Veröffentlichungstag und Bekanntmachung des Hinweises auf die Patenterteilung: **12.11.2014**
(21) Anmeldenummer: 13172394.2
(22) Anmeldetag: 18.06.2013
(51) Int. Cl.: B65G 47/88, B65G 1/08

(54) **Separiervorrichtung**
Separating device
Dispositif de séparation

(30) Priorität: 11.07.2012 DE 102012212145
(43) Veröffentlichungstag der Anmeldung: 15.01.2014
(73) Patentinhaber: BITO-Lagertechnik Bittmann GmbH, 55590 Meisenheim (DE)
(72) Erfinder: Gassenr, Okten, 55571 Obernheim (DE); Neu Sascha, 66885 Altenglan (DE); Herder Frank, 55606 Bärweiler (DE); Kemperdick Artur, 55758 Niederwörresbach (DE); Nothof Christian, 55590 Meisenheim (DE)
(74) Vertreter: Richardt Patentanwälte PartG mbB

(56) Entgegenhaltungen:
- DE-A1- 3 417 158
- DE-A1- 19 636 842
- US-A- 4 185 729

## Beschreibung

Die Erfindung betrifft eine Separiervorrichtung für ein Durchlaufregal zur Separierung von einer Aufgabeseite zu einer Entnahmeseite hin beförderten Ladungsträgern nach dem Oberbegriff des Anspruchs 1. Bei mit Schwerkraft betriebenen Durchlaufregalen für Ladungsträger, wie zum Beispiel Paletten oder Behälter, steht an dem ersten Ladungsträger, der sich auf der Entnahmeseite befindet, der größte Druck an. Je länger die Durchlaufbahn des Durchlaufregals ist, desto höher ist dieser Druck. Aufgrund dieses hohen Staudrucks lässt sich der vorderste Ladungsträger an der Entnahmeseite nicht ohne Probleme entnehmen. Es kommt oft zu Beschädigungen an den Ladungsträgern und/oder Lagergut.

Um eine solche Beschädigung zu vermeiden, ist aus der EP 0 842 874 A2 eine Separiervorrichtung bekannt, die eine erste vorderste Palette und eine nachfolgende zweite Palette separiert. Wenn sich die erste Palette in Förderrichtung zur Entnahmeseite des Durchlaufregals bewegt, verschwenkt sie eine angrenzend an die Entnahmeseite vorgesehene Steuerfahne aus einer ersten Stellung, in der sie sich über die Förderebene hinauserstreckt, in eine zweite Stellung, in der sie in der Förderebene liegt. Die Steuerfahne ist über eine Betätigungsstange so mit einer Förderrichtung stromaufwärts angeordneten Anschlageinrichtung verbunden, dass die Anschlageinrichtung bei der genannten Bewegung aus einer Freigabestellung, in der sie sich unterhalb der Förderebene befindet, in eine Anschlagstellung bewegt wird, in der sie sich über die Förderebene hinaus erstreckt. An dieser Anschlageinrichtung schlägt die nachfolgende zweite Palette an. Sobald die erste Palette vom Durchlaufregal entnommen wird, wird die Steuerfahneneinrichtung durch eine Vorspanneinrichtung wieder in die erste Stellung bewegt. Gleichzeitig wird die Anschlageinrichtung über die Betätigungsstange aus der Anschlagstellung in die Freigabestellung bewegt, so dass sich die zweite Palette zur Entnahmeseite hin bewegen kann. Diese Bewegung der Palette ermöglicht es, dass die erste Palette ohne Staudruck von dem Durchlaufregal entnommen werden kann.

Das Dokument DE 3417 158 A1 offenbart eine Separiervorrichtung für ein Durchlaufregal nach dem Oberbegriff des Anspruchs 1. Demgegenüber liegt der Erfindung die Aufgabe zugrunde, eine verbesserte Separiervorrichtung zu schaffen.

Die der Erfindung zugrunde liegende Aufgabe wird mit den Merkmalen des unabhängigen Patentanspruchs gelöst. Bevorzugte Ausführungsformen der Erfindung sind in den abhängigen Patentansprüchen angegeben.

Es ist eine Separiervorrichtung für ein Durchlaufregal zur Separierung von von einer Aufgabeseite zu einer Entnahmeseite hin beförderten Ladungsträger mit einer Steuerfahne beschrieben, die durch einen sich in Förderrichtung bewegenden Ladungsträger in seiner ersten Stellung in eine zweite Stellung verschwenkbar ist, und mit einer in der Förderrichtung stromaufwärts vor der Steuerfahne angeordneten Vereinzelungsanschlageinrichtung mit einem Anschlagelement. Die Vereinzelungsanschlageinrichtung ist mit der Steuerfahne mechanisch so über einen Auslöser gekoppelt, dass sich im Falle dessen sich die Steuerfahne in der zweiten Stellung befindet das Anschlagelement in einem verriegelten Anschlagzustand befindet, in dem es sich über die Förderebene hinauserstreckt, wobei in der zweiten Stellung der Ladungsträger die Vereinzelungsanschlageinrichtung passiert hat und die Steuerfahne in der zweiten Stellung hält. Ferner ist die Vereinzelungsanschlageinrichtung mit der Steuerfahne mechanisch so über den Auslöser gekoppelt, dass sich im Falle dessen sich die Steuerfahne sich in der ersten Stellung befindet das Anschlagelement in einem Freigabezustand befindet, in dem es sich hinter die Förderebene bewegen kann.

Die Vereinzelungsanschlageinrichtung weist ferner einen um einen Riegel-Drehpunkt drehbar gelagerten Riegel auf, wobei der Riegel ein erstes Ende und ein zweites Ende aufweist, wobei das erste Ende und das zweite Ende relativ zum Riegel-Drehpunkt auf einander gegenüberliegenden Seiten des Riegels liegen, wobei der Riegel zwischen einer Verriegelungsposition zum Erhalt des verriegelten Anschlagszustands und einer Freigabeposition zum Erhalt des Freigabezustands um den Riegel-Drehpunkt schwenkbar ist, wobei das zweite Ende des Riegels so ausgebildet ist, dass in der Verriegelungsposition das zweite Ende des Riegels eine Bewegung des Anschlagselements blockiert und in der Freigabeposition das zweite Ende des Riegels eine Bewegung des Anschlagelements freigibt. Ferner ist der Auslöser um einen Auslöser-Drehpunkt drehbar an der Vereinzelungsanschlageinrichtung so gelagert, dass durch den Auslöser in der zweiten Stellung der Steuerfahne das erste Ende des Riegels gegen eine Drehbewegung des Riegels blockiert ist. Schließlich ist der Auslöser um den Auslöserdrehpunkt drehbar an der Vereinzelungsanschlageinrichtung so gelagert, dass in der ersten Stellung der Steuerfahne das erste Ende des Riegels für eine Drehbewegung des Riegels freigegeben ist.

Nach einer Ausführungsform der Erfindung sind Auslöser und Steuerfahne lose mechanisch miteinander gekoppelt, so dass entsprechend der Schwenkposition der Steuerfahne die Vereinzelungsanschlageinrichtung betätigt werden kann. Ausführungsformen der Erfindung könnten besonders vorteilhaft sein, da eine direkte mechanische Kopplung der Vereinzelungsanschlageinrichtung und der Steuerfahne durch eine Betätigungsstange vermieden werden kann. Eine solche direkte mechanische Kopplung hat nämlich zum Nachteil, dass hierdurch nicht nur ein Kraftpfad zur Übertragung einer Betätigungskraft von der Steuerfahne auf die Vereinzelungsanschlageinrichtung ausgeübt wird, um den verriegelnden Anschlagszustand bzw. den Freigabezustand festzulegen, sondern dass auch bei einem unsachgemäßen Betrieb des Durchlaufregals ein Kraftpfad dann gebildet wird, wenn beispielsweise das Anschlagelement in einem Freigabezustand durch einen passierenden Ladungsträger weggeschwenkt wird und gleichzeitig eine Kraft auf die Steuerfahne ausgeübt wird, um den Verriegelungsanschlagzustand einzustellen. Bei einem solch unsachgemäßen Betrieb kann es zu einer schwerwiegenden Beschädigung der Separiervorrichtung kommen.

Hier könnte nach Ausführungsformen der Erfindung Abhilfe geschaffen werden, indem prinzipiell ein Kraftpfad von der Steuerfahne zu dem Auslöser der Vereinzelungsanschlageinrichtung durch eine lose mechanische Kopplung gebildet werden kann, um diesen in seiner Position zu steuern, nicht aber ein direkter Kraftpfad zwischen dem Anschlagelement der Vereinzelungsanschlageinrichtung und der Steuerfahne. Durch diese lose mechanische Kopplung zwischen der Steuerfahne und dem Auslöser werden also Beschädigungen der Separiervorrichtung bei einem unsachgemäßen Betrieb des Durchlaufregals vermieden.

Unter einer "losen mechanischen Kopplung" wird hier jede Art der mechanischen Kopplung zwischen der Steuerfahne und der Vereinzelungsanschlageinrichtung verstanden, über die im Normalbetrieb der Verriegelungsanschlagszustand bzw. der Freigabezustand einstellbar ist, und welche in einem Betriebszustand der Separiervorrichtung, in dem beispielsweise durch entsprechende Bewegung der Steuerfahne der verriegelte Anschlagszustand eingestellt werden soll, während ein Ladungsträger gerade die Separiervorrichtung passiert, kein Kraftpfad von der Steuerfahne zu der Vereinzelungsanschlageinrichtung gebildet wird, so dass eine Beschädigung der Mechanik vermieden wird.

Unter einer "Vereinzelungsanschlageinrichtung" werden hier insbesondere Mittel verstanden, die dazu ausgebildet sind, einen Anschlag mit einem Ladungsträger zu bilden, um diesen zu stoppen, wenn sich die Vereinzelungsanschlageinrichtung in dem verriegelten Anschlagszustand befindet, und die dazu ausgebildet sind, einen Ladungsträger passieren zu lassen, wenn sich die Vereinzelungsanschlageinrichtung in dem Freigabezustand befindet. Die Vereinzelungsanschlageinrichtung kann also zumindest zwei Betriebszustände einnehmen, nämlich den verriegelten Anschlagzustand und den Freigabezustand, sowie - je nach Ausführungsform - einen transienten Zustand beim Übergang zwischen dem Freigabezustand und dem verriegelten Anschlagzustand und zurück.

Ausführungsformen der Erfindung könnten ferner deshalb besonders vorteilhaft sein, weil mit der beschriebenen Separiervorrichtung auch mit geringem Kraftaufwand, welcher auf die Steuerfahne wirkt, dennoch leichtgängig das Anschlagelement zwischen dem verriegelten Anschlagszustand und dem Freigabezustand geschaltet werden kann. Selbst wenn also auf das Anschlagelement aufgrund eines hohen Staudrucks von Paletten eine sehr hohe Kraft wirkt, genügt ein minimaler Kraftaufwand auf die Steuerfahne, um das Anschlagelement zwischen dem verriegelten Anschlagszustand und dem Freigabezustand zu "schalten". Der Grund liegt darin, dass die Steuerfahne nicht direkt mechanisch mit dem Anschlagelement gekoppelt ist, sondern dass zwischen Anschlagelement und Steuerfahne ein leichtgängiger Riegel angeordnet ist, welcher mit minimalem Kraftaufwand über den Auslöser und eine entsprechend verwendete Hebelwirkung zwischen Auslöser und Steuerfahne geschaltet wird.

Nach einer Ausführungsform der Erfindung ist am Anschlagelement ein Bolzen angeordnet, wobei in dem Anschlagzustand die Blockierung der Bewegung des Anschlagelements aus einer Blockierung der Bewegung des Bolzens durch das zweite Ende des Riegels resultiert und wobei in dem Freigabezustand die Freigabe der Bewegung des Anschlagelements aus einer Freigabe der Bewegung des Bolzens durch das zweite Ende resultiert. Auch hier kommt wieder das Hebelprinzip zum Einsatz, so dass durch die beschriebene Ausgestaltung weiter die zum Schalten des Anschlagelements zwischen den besagten zwei Zuständen notwendige Kraft minimiert wird. Vorzugsweise ist der Bolzen starr in dem Anschlagelement verbunden. Vorzugsweise kann weiter der Bolzen in einer Ebene senkrecht zur Förderebene rotieren.

Nach einer Ausführungsform der Erfindung ist der Riegel zumindest zweigeteilt, nämlich mit einem ersten Riegelteil und einem zweiten Riegelteil, wobei das erste Riegelteil und das zweite Riegelteil jeweils um einen Riegeldrehpunkt gelagert sind und das erste und das zweite Ende aufweisen. Zum Beispiel könnten die beiden Riegel in dem verriegelten Anschlagzustand in symmetrischer Weise den Anpressdruck aufnehmen, welcher über das Anschlagelement auf den Bolzen wirkt. Beim Übergang des Riegels von der Verriegelungsposition zur Freigabeposition muss damit jeder Riegel nur die Hälfte der insgesamt vom Bolzen auf die Riegel wirkende Anpresskraft und der daraus resultierenden Reibung überwinden. Würde lediglich ein einzelner Riegel zum Einsatz kommen, wäre dementsprechend die Reibekraft, welche auf den einzelnen Riegel wirkt, doppelt so hoch als im Falle der Verwendung zweier Riegel.

Nach einer Ausführungsform der Erfindung ist das zweite Ende des Riegels so geformt, dass im Falle dessen sich die Steuerfahne in der ersten Stellung befindet aufgrund der Anpresskraft des Bolzens auf das zweite Ende des Riegels der Riegel selbstständig von der Verriegelungsposition in die Freigabeposition schwingt. Es kann hier also insbesondere auf zusätzliche Federelemente verzichtet werden, um den Übergang von der Verriegelungsposition in die Freigabeposition zu bewirken.

Nach einer Ausführungsform der Erfindung weist der Auslöser einen ersten Anschlag aufweist, wobei das erste Ende des ersten Riegelteils ein erstes Führungselement aufweist, wobei der erste Anschlag in dem verriegelten Anschlagzustand das Führungselement teilweise umgreift. Vorzugsweise umgreift in dem verriegelten Anschlagzustand der erste Anschlag das erste Führungselement so weit, dass das erste Führungselement und der erste Anschlag einen Totpunkt bilden.

Dies könnte den Vorteil haben, dass zum Halten des Anschlagelements im verriegelten Anschlagzustand keinerlei Kräfte notwendig sind, welche über die Steuerfahne auf den Auslöser oder den oder die Riegel wirken. Es genügt hier also, durch entsprechend stabile Auslegung von Riegel und Auslöser die auf den Riegel über das Anschlagelement wirkende Kraft zu kompensieren, ohne Rücksichtnahme auf die mechanische unter Umständen weniger stabile Ausgestaltung der Steuerfahne.

Nach einer Ausführungsform der Erfindung weist der erste Anschlag des Auslösers einen Fortsatz auf, wobei der Fortsatz so geformt ist, um bei Überführung des Anschlagelements vom Freigabezustand in den verriegelten Anschlagzustand das erste Führungselement von der Freigabeposition in die Anschlagposition zu drängen. Zum Beispiel weist der Auslöser eine Auflagefläche für den Bolzen auf, wobei die Auflagefläche in dem Freigabezustand dem Bolzen zugewandt ist. In dem Augenblick, wenn das Anschlagelement vom Freigabezustand zurück in den verriegelten Anschlagzustand schwingt, wirkt über den Bolzen eine Kraft auf die Auflagefläche des Auslösers, so dass wiederum der Auslöser mit seinem Fortsatz das Führungselement in die Anschlagposition zurückdrängt. Auch hierzu ist also beim Übergang vom Freigabezustand zum verriegelten Anschlagzustand keinerlei Krafteinwirkung seitens der Steuerfahne notwendig. Steuerfahne und die übrigen Elemente der Vereinzelungsanschlageinrichtung sind mechanisch voneinander entkoppelt.

Nach einer Ausführungsform der Erfindung weist die Vereinzelungsanschlageinrichtung einen zweiten Anschlag für den Auslöser auf, wobei der zweite Anschlag zur Begrenzung der Drehbewegung des Auslösers (in Richtung des Bolzens) um den Auslöserdrehpunkt in der zweiten Stellung der Steuerfahne ausgebildet ist. Dies könnte den Vorteil haben, dass ein Überdrehen des Auslösers vermieden wird. Damit kann sich der Auslöser zwischen zwei exakt definierten Positionen bewegen, nämlich einmal die Position, welche durch den zweiten Anschlag begrenzt ist und zum anderen die Position, in welcher beispielsweise in dem verriegelten Anschlagzustand der erste Anschlag das erste Führungselement umgreift und blockiert. Nach einer Ausführungsform der Erfindung ist das zweite Ende des Riegels so ausgebildet, dass in der Freigabeposition das zweite Ende des Riegels einen seitlichen Anschlag vor dem Bolzen bildet. Dies könnte den Vorteil haben, dass der Bolzen nie außer Eingriff des Riegels gerät. Der Riegel kann also nicht im Freigabezustand "hinter" dem Bolzen zufallen, so dass anschließend eine Rückwärtsbewegung des Bolzen und damit des Anschlagelements in die Verriegelungsposition blockiert wäre. Außerdem ermöglicht dies, vollkommen ohne Rückstellelemente wie beispielsweise Federn bezüglich des Riegels auszukommen. Die Position des Riegels wird zwangsgeführt durch die aktuelle Position des Bolzens und die aktuelle Position des Auslösers, wobei letztere Position wiederum durch die Position des Bolzens bestimmt wird.

Nach einer Ausführungsform der Erfindung weist das erste Ende des zweiten Riegelteils ein zweites Führungselement auf, wobei der Auslöser eine Führungsfläche aufweist, wobei die Führungsfläche so geformt ist, um bei Überführung des Anschlagelements vom Freigabezustand in den verriegelten Anschlagzustand das zweite Führungselement von der Freigabeposition in die Anschlagposition zu drängen. Auch hier könnte wiederum eine Kraft vom Bolzen auf die Auflagefläche des Auslösers wirken, wodurch der Auslöser wiederum die besagte Kraft über die Führungsfläche auf das zweite Führungselement ausübt. Dadurch wird das zweite Führungselement in die Anschlagposition gedrängt.

Zum Beispiel sind die Führungsflächen und der Fortsatz so geformt, um bei Überführung des Anschlagelements vom Freigabezustand in den verriegelten Anschlagzustand das erste Führungselement und das zweite Führungselement gleichzeitig von der Freigabeposition in die Anschlagposition zu drängen. Hier sind vorzugsweise das erste und das zweite Riegelteil symmetrisch zueinander geformt. Wie bereits oben erwähnt hat so eine symmetrische Ausgestaltung von Elementen der Separiervorrichtung den Vorteil, dass vom Anschlagelement auf einzelne Komponenten der Separiervorrichtung wirkende Kräfte gleichmäßig verteilt werden können. Dadurch wird insgesamt eine Leichtgängigkeit des Mechanismus gewährleistet und außerdem müssen die einzelnen Bauelemente mechanisch nicht so hochstabil ausgelegt werden, wie dies der Fall wäre, wenn lediglich ein einzelner Riegel verwendet werden würde.

Nach einer Ausführungsform der Erfindung umfasst die Kopplung der Steuerfahne über den Auslöser eine Kulissenführung. Dies trägt weiter dazu bei, dass Steuerfahne und Anschlagelement mechanisch voneinander gekoppelt sind. Befindet sich beispielsweise die Steuerfahne in der ersten Stellung und das Anschlagelement in dem Freigabezustand, könnte es unter Umständen passieren, dass plötzlich - aus welchen Gründen auch immer - die Steuerfahne von der ersten Stellung in die zweite Stellung bewegt wird. Dadurch, dass jedoch Steuerfahne und Auslöser über eine Kulissenführung miteinander gekoppelt sind, hat diese Bewegung auf den Auslöser keinerlei Auswirkung. Erst nachdem das Anschlagelement wieder frei von dem Ladungsträger ist, schwenkt dieses, beispielsweise aufgrund einer Rückstellfeder, zurück in den Anschlagzustand, wodurch automatisch und selbständig ohne weitere Krafteinwirkung der Auslöser betätigt wird, wodurch der Riegel von der Freigabeposition zurück in die Verriegelungsposition schwenkt.

Durch die Kopplung der Steuerfahne oder dem Auslöser mittels einer Kulissenführung wird also die Gefahr von Materialbeschädigungen der Separiervorrichtung minimiert.

Nach einer Ausführungsform der Erfindung umfasst die Kopplung der Steuerfahne über den Auslöser eine Koppelstange, wobei die Koppelstange eine Aussparung aufweist und wobei der Auslöser einen Kulissenstein aufweist, wobei die Kulissenführung durch die Aussparung und den Kulissenstein gebildet wird.

Nach einer Ausführungsform der Erfindung ist der Auslöser an dem Auslöserdrehpunkt schwimmend gelagert. Dies könnte den Vorteil haben, dass bei Fertigungstoleranzen hinsichtlich des ersten Führungselements und des ersten Anschlags des Auslösers dennoch eine leichtgängige Betätigung der Separiervorrichtung gewährleistet ist.

Nach einer weiteren Ausführungsform der Erfindung verläuft die Schwenkachse der Steuerfahne im Wesentlichen senkrecht zu der Förderebene. Dadurch ist die Steuerfahne zum Beispiel in etwa parallel zu der Förderebene schwenkbar. Durch einen passierenden Ladungsträger wird die Steuerfahne nicht nach unten gedrückt, wie sonst im Stand der Technik üblich, sondern seitlich weggeschwenkt. Dies hat den Vorteil, dass die Steuerfahne von dem passierenden Ladungsträger auch dann noch in der zweiten Stellung gehalten wird, wenn die vordere Begrenzung des Ladungsträgers das Anschlagelement schon längs passiert hat, solange die hintere Begrenzung des Ladungsträgers gerade noch im Bereich des äußersten Endes der Steuerfahne ist.

Wenn beispielsweise der betreffende Ladungsträger den Entnahmeanschlag des Durchlaufregals an der Entnahmeseite erreicht hat und von dort beispielsweise mit einem Gabelstapler entnommen werden soll, so hat dies verschiedene Vorteile:

Wenn der Ladungsträger durch den Gabelstapler zunächst längs von der Förderebene abgehoben wird, so wird die Steuerfahne dennoch in ihrer zweiten Stellung gehalten, da sie oberhalb der Förderebene angeordnet ist. Die Vereinzelungsanschlageinrichtung verbleibt also in dem verriegelten Anschlagzustand, so dass der nachfolgende Ladungsträger noch an dem Anschlagelement der Vereinzelungsanschlageinrichtung verbleibt.

Dies hat den Vorteil, dass der nachfolgende zweite Ladungsträger nicht auf den ersten Ladungsträger, der gerade entnommen werden soll, während des Entnahmevorgangs trifft.

Ein weiterer wesentlicher Vorteil ergibt sich dann, wenn der Entnahmevorgang des ersten Ladungsträgers abgebrochen werden muss. Beispielsweise fährt ein Gabelstapler ein Stück weit zurück, um den ersten Ladungsträger, nachdem er leicht von der Förderebene abgehoben wurde, rückwärts aus der Entnahmeseite zu entnehmen. Aufgrund der Überlappung der hinteren Begrenzung des ersten Ladungsträgers mit dem Ende der Steuerfahne verbleibt diese auch dann noch in ihrer zweiten Stellung, wenn der Gabelstapler bereits ein kleines Stück zurückgefahren ist. Wenn der Entnahmevorgang in diesem Stadium abgebrochen oder rückgängig gemacht werden soll, so ist dies ohne Weiteres möglich, da sich die Vereinzelungsanschlageinrichtung noch in ihrem verriegelten Anschlagzustand befindet. Der Gabelstapler kann also wieder ein Stück vorfahren, um beispielsweise einen hinterkreuzenden Gabelstapler passieren zu lassen, ohne dass es hierdurch zu Beschädigungen an den Ladungsträgern oder der Separiervorrichtung kommen kann. Besonders bevorzugt ist hierbei, wenn sich die Steuerfahne über zumindest die halbe Breite des Durchlaufregals, vorzugsweise über die gesamte Breite des Durchlaufregals erstreckt, da auf diese Art und Weise der Überlappungsbereich zwischen dem hinteren Ende des Ladungsträgers und dem Ende der Steuerfahne während des Entnahmevorgangs maximiert wird.

Nach einer Ausführungsform der Erfindung hat die Steuerfahne eine Länge von zumindest einer halben Länge des Entnahmebereichs zwischen dem Entnahmeanschlag und dem Anschlagelement. Insbesondere kann die Steuerfahne eine Länge von 50-75 % der Länge des Aufnahmebereichs aufweisen. Dies ist besonders vorteilhaft, um einen sogenannten Mischbetrieb von Ladungsträgern unterschiedlicher Längen zu ermöglichen. Wenn beispielsweise zwei verschiedene Typen von Ladungsträgem zum Einsatz kommen, nämlich ein kurzer Ladungsträger und ein langer Ladungsträger, der die doppelte Länge hat wie ein kurzer Ladungsträger, und der Aufnahmebereich eine Länge aufweist, die zur Aufnahme eines der langen Ladungsträger ausreichend ist, so ermöglicht dies einen optimalen Mischbetrieb mit langen und kurzen Ladungsträgern. Dies gilt insbesondere dann, wenn die Steuerfahne mindestens die Länge eines kurzen Ladungsträgers aufweist, so dass die Steuerfahne auch dann in der zweiten Stellung gehalten wird, wenn sich in dem Aufnahmebereich nur ein kurzer Ladungsträger befindet.

Beispielsweise können als Ladungsträger kurze Euro-Paletten einer Länge von 600 mm und lange Euro-Paletten einer Länge von 1200 mm für einen Mischbetrieb des Durchlaufregals zum Einsatz kommen. Solche lange Euro-Paletten werden üblicherweise als Euro-Paletten bezeichnet und kurze Euro-Paletten als Düsseldorfer-Paletten. In diesem Fall hat der Aufnahmebereich vorzugsweise eine Länge von mindestens 1200 mm und die Länge der Steuerfahne beträgt mehr als die Länge einer Düsseldorfer-Palette, das heißt mehr als 600 mm, vorzugsweise 700 mm bis 750 mm, so dass der Überlappungsbereich zwischen der Steuerfahne und einer am Endanschlag befindlichen kurzen Euro-Palette beispielsweise 100 mm bis 150 mm beträgt.

Nach einer Ausführungsform der Erfindung ist die Steuerfahne elastisch verformbar, insbesondere aus einem elastisch verformbaren Kunststoff oder aus Gummi. Dies hat den Vorteil, dass ein weiterer Schutz gegen eine Beschädigung der Separiervorrichtung gegeben ist, auch dann, wenn es im Einzelfall doch dazu kommt, dass die ersten und zweiten Ladungsträger auf der Entnahmeseite aufeinanderprallen.

Nach einer Ausführungsform der Erfindung hat die Steuerfahne ein Dämpfungselement, um das Zurückschwenken der Steuerfahne aus der zweiten Stellung in die erste Stellung zu verlangsamen. Hiermit wird erreicht, dass nach Freigabe der Steuerfahne in der zweiten Stellung durch vollständige Entnahme des ersten Ladungsträgers der Übergang von dem verriegelten Anschlagzustand in den Freigabezustand mit leichter Verzögerung erfolgt, um zusätzlich sicherzustellen, dass der nachfolgende zweite Ladungsträger nach dem Passieren des Anschlagelements nicht auf die hintere Begrenzung des ersten Ladungsträgers treffen kann. Beispielsweise kann das Dämpfungselement in der besagten Kulissenführung integriert sein. Dies kann durch eine entsprechende Reibung zwischen Kulissensteinen und Aussparung bewerkstelligt werden.

Nach einer Ausführungsform der Erfindung ist der Abstand zwischen dem Anschlagelement und dem Entnahmeanschlag größer oder gleich der Länge des längsten der ersten und zweiten Ladungsträger.

Nach einer Ausführungsform der Erfindung ist der Abstand zwischen dem Entnahmeanschlag und dem Anschlagelement nicht größer ist als die Summe der Länge des kürzesten der ersten und zweiten Ladungsträger und der Länge der Steuerfahne, sodass die Steuerfahne durch jeden der ersten und zweiten Ladungsträger in der zweiten Stellung gehalten wird, wenn der betreffende Ladungsträger an dem Entnahmeanschlag anliegt.

Im Weiteren werden Ausführungsformen der Erfindung mit Bezugnahme auf die Zeichnungen erläutert. Es zeigen:
- Fig. 1: eine perspektivische Ansicht eines Durchlaufregals, wobei sich die Steuerfahne in der ersten Stellung befindet,
- Fig. 2: eine perspektivische Ansicht eines Durchlaufregals beim Passieren der Vereinzelungsanschlageinrichtung durch einen Ladungsträger,
- Fig. 3: eine perspektivische Ansicht eines Durchlaufregals mit einem Ladungsträger in dem Entnahmebereich und einem Ladungsträger an dem Anschlagelement,
- Fig. 4: eine schematische Aufsicht auf ein Durchlaufregal mit einem Ladungsträger auf der Entnahmeseite,
- Fig. 5: eine Ansicht des Durchlaufregals der Fig. 4 während der Entnahme des Ladungsträgers,
- Fig. 6: eine Aufsicht auf ein Durchlaufregal bei entnahmeseitig aufeinander stoßenden Ladungsträgern,
- Fig. 7: eine schematische Ansicht einer Vereinzelungsanschlageinrichtung im Freigabezustand des Anschlagelements,
- Fig. 8: eine schematische Ansicht einer Vereinzelungsanschlageinrichtung beim Übergang vom Freigabezustand zum verriegelten Anschlagzustand des Anschlagelements,
- Fig. 9: eine schematische Ansicht einer Vereinzelungsanschlageinrichtung, bei welcher sich das Anschlagelement in dem verriegelten Anschlagzustand befindet,
- Fig. 10: eine Seitenansicht eines Durchlaufregals mit quer aufgesetzter Palette.

Im Weiteren werden entsprechende Elemente der beschriebenen Beispiele jeweils mit gleichen Bezugszeichen gekennzeichnet.

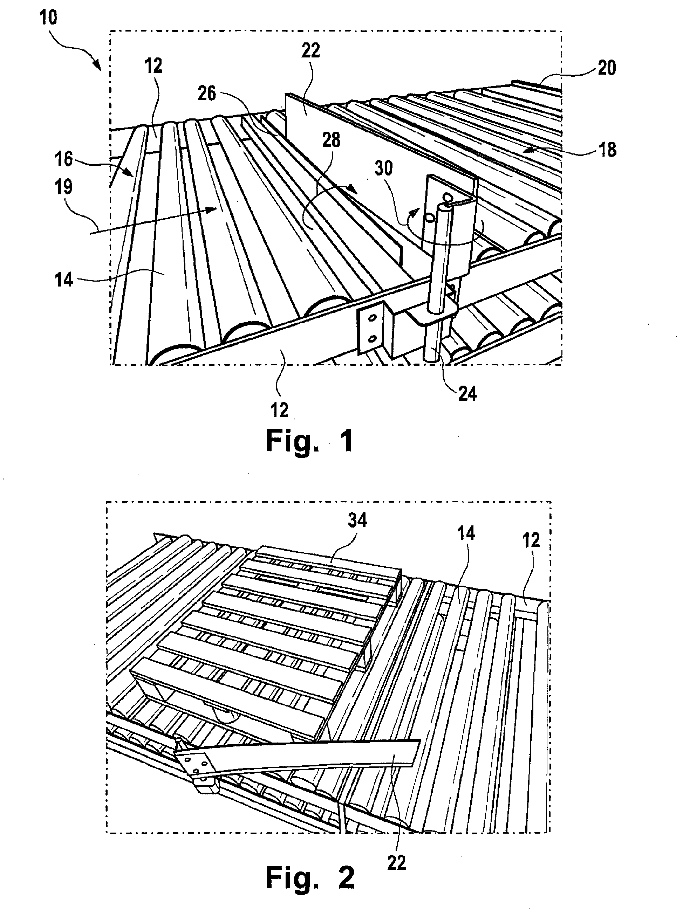

Die Figur 1 zeigt ein Durchlaufregal, welches hier aus einer Rollenbahn 10 besteht. Die Rollenbahn 10 wird durch einen Rahmen 12 gebildet, in dem mehrere Transportrollen 14 hintereinander angeordnet sind, um so eine Förderebene zu bilden, in der Ladungsträger von einer Aufgabeseite 16 zu einer Entnahmeseite 18 in Förderrichtung 19 gefördert werden können, bis ein Ladungsträger den Entnahmeanschlag 20 erreicht hat.

In dem hier betrachteten Beispiel hat die Rollenbahn 10 ein leichtes Gefälle von der Aufgabeseite 16 zu der Entnahmeseite 18 hin, sodass die Ladungsträger aufgrund der Schwerkraft in die Förderrichtung 19 befördert werden.

An der Rollenbahn 10 ist eine Steuerfahne 22 befestigt, die sich in der hier betrachteten Ausführungsform von dem in Förderrichtung 19 rechten Rand der Rollenbahn 10 bis etwa zur Mitte der Rollenbahn 10 erstreckt. In anderen Beispielen kann sich die Steuerfahne 22 darüber hinaus zum Beispiel bis zum linken Rand der Rollenbahn erstrecken.

Die Steuerfahne 22 ist um eine Schwenkachse 24 schwenkbar an dem Rahmen 12 gelagert, sodass die Steuerfahne 22 im Wesentlichen parallel zu der durch die Transportrollen 14 gebildeten Förderebene durch einen passierenden Ladungsträger verschwenkbar ist. Die Figur 1 zeigt die Steuerfahne 22 in ihrer ersten Stellung, wenn sie nicht durch einen passierenden Ladungsträger verschwenkt ist.

Unmittelbar vor der in Figur 1 gezeigten ersten Stellung der Steuerfahne 22 ist in Förderrichtung 19 ein Anschlagelement 26 einer Vereinzelungsanschlageinrichtung angeordnet, welches sich in einem verriegelten Anschlagzustand oder einem Freigabezustand befinden kann. In dem Freigabezustand wird das Anschlagelement 26 durch die Vorderkante eines das Anschlagelement 26 passierenden Ladungsträgers (vgl. beispielsweise Ladungsträger 34 und 60, wie in einigen der nachfolgenden Figuren gezeigt) in Pfeilrichtung 28 weggeschwenkt, sodass der Ladungsträger auf die Steuerfahne 22 trifft und diese seitlich in Pfeilrichtung 30 wegschwenkt, wie in der Figur 1 gezeigt.

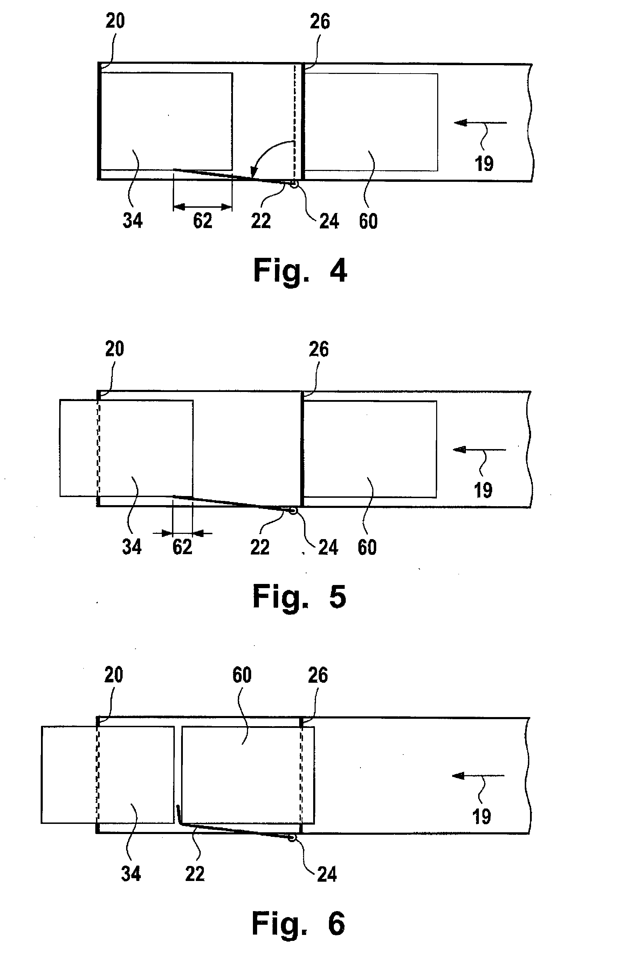

Befindet sich das Anschlagelement 26 dagegen in seinem verriegelten Anschlagzustand, so ist die Schwenkbewegung in Pfeilrichtung 28 blockiert, sodass ein mit seiner Vorderkante auf das Anschlagelement 26 auftreffender Ladungsträger durch das Anschlagelement 26 gestoppt wird, wie dies beispielsweise für den Ladungsträger 60 in Fig. 4 der Fall ist.

Zur Einstellung des verriegelten Anschlagzustands bzw. des Freigabezustands ist die Steuerfahne 22 mit dem Anschlagelement 26 der Vereinzelungsanschlageinrichtung mechanisch lose gekoppelt, wie es im Weiteren näher erläutert wird.

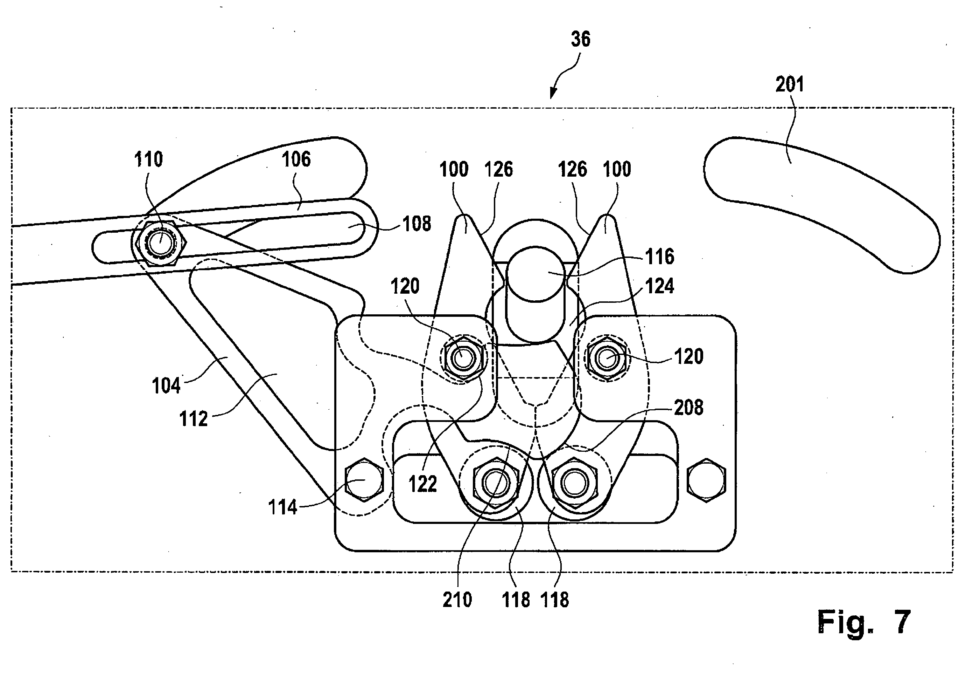

Die Figur 2 zeigt die Rollenbahn 10 zu einem Zeitpunkt, zu dem ein Ladungsträger 34 das Anschlagelement 26 passiert und die Steuerfahne 22 aus ihrer ersten in die zweite Stellung verschwenkt. In dieser Position ist ein in Fig. 2 nicht ersichtlicher Verriegelungsbolzen, welcher an dem Anschlagelement fixiert ist, aufgrund der Verschwenkung des Anschlagelements 26 aus ebenfalls nicht ersichtlichen Riegeln der Vereinzelungsanschlageinrichtung herausgeschwenkt, wie in der Figur 7 dargestellt.

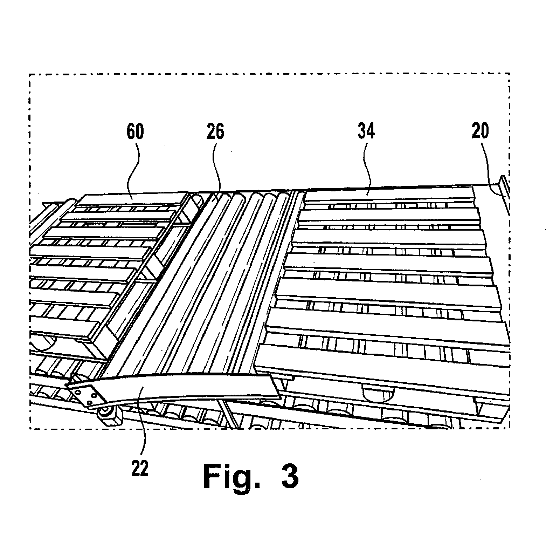

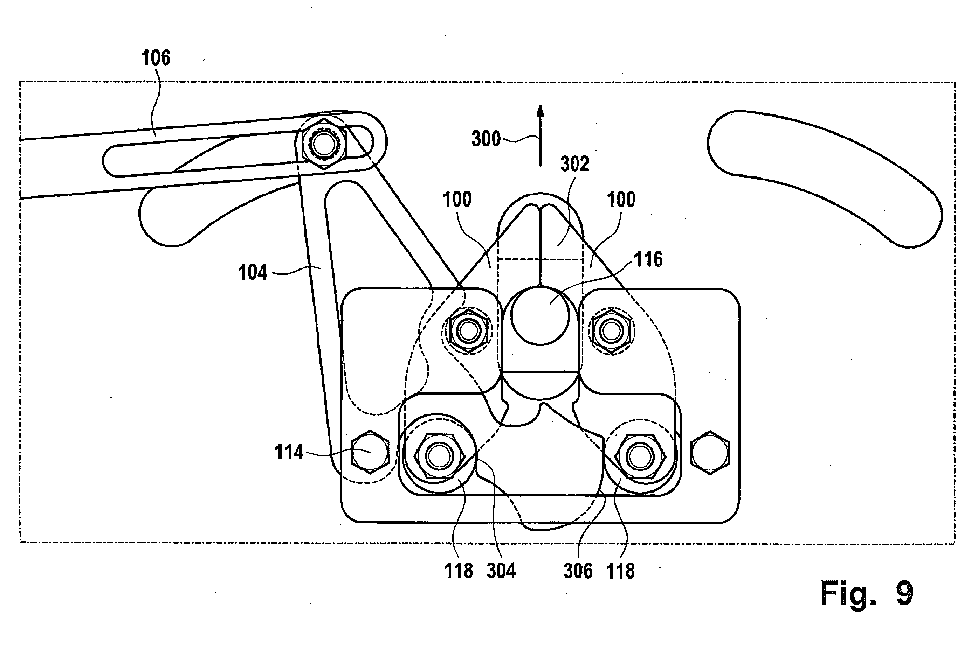

Die Figur 3 zeigt die Rollenbahn 10, nachdem der Ladungsträger 34 das Anschlagelement 26 vollständig passiert hat und den Entnahmebereich der Rollenbahn, das heißt den Endanschlag 20 erreicht hat. In dieser Position hält der Ladungsträger 34 die Steuerfahne 22 in der ersten Stellung, so dass das Anschlagelement aufgrund des Einrastens des Verriegelungsbolzens in den Riegeln der Vereinzelungsanschlageinrichtung seinen verriegelten Anschlagzustand einnimmt, wie dies in Fig. 9 dargestellt ist. Ein nachfolgender weiterer Ladungsträger 60 wird daher von dem Anschlagelement 26 gestoppt.

Die Figur 4 zeigt in schematischer Draufsicht ein Durchlaufregal im Betrieb. In dem gezeigten Zustand hat ein erster Ladungsträger 34 die Steuerfahne 22, die hier die gesamte Breite der Rollenbahn 10 überspannt, aus der ersten Stellung in die zweite Stellung verschwenkt und den Entnahmeanschlag 20 erreicht. In dieser Position hält der Ladungsträger 34 die Steuerfahne 22 also durch den Überlappungsbereich 62 in ihrer zweiten Position, sodass der verriegelte Anschlagzustand, wie in der Figur 9 dargestellt, eingestellt ist. Ein nachfolgender Ladungsträger 60 wird daher durch das Anschlagelement 26 gestoppt.

Der Ladungsträger 34 wird dann zum Beispiel durch einen Gabelstapler oder robotisch von der Förderebene abgehoben und dann über den Entnahmeanschlag 20 von dem Durchlaufregal entnommen, wie in der Figur 5 dargestellt. Dabei gibt der Ladungsträger 34 aufgrund seiner Längenerstreckung nicht sofort die Steuerfahne 22 frei; es verkürzt sich dabei zunächst nur der Überlappungsbereich 62 zwischen dem hinteren Ende der Ladungsträgers 34 und dem äußeren Ende der Steuerfahne 22 , die zweite Stellung der Steuerfahne 22 wird aber beibehalten. Dies hat den Vorteil, dass in der in der Figur 5 gezeigten Entnahmeposition des Ladungsträgers 34 dieser wieder entgegen der Förderrichtung 19 in die Entnahmeseite 18 zurückverfahren werden kann, beispielsweise um einen anderen Gabelstapler passieren zu lassen. Bei einem solchen Abbruch des Entnahmevorgangs in der in Figur 5 gezeigten Position ist ferner vorteilhaft, dass der Ladungsträger 60 zunächst an dem Anschlagelement 26 verbleibt, sodass er nicht auf den vorderen Ladungsträger 34 auftreffen kann.

Die Figur 6 zeigt ein weiteres Beispiel des Durchlaufregals mit einer elastischen Steuerfahne 22. In dem in der Figur 6 gezeigten Betriebszustand wurde der Ladungsträger 34 bereits teilweise aus der Entnahmeseite 18 entnommen, und zwar so weit, dass die Steuerfahne 22 bereits freigegeben worden ist und ein Stück weit in Richtung auf ihre erste Stellung zurückgeschwenkt ist. Dadurch wurde der Freigabezustand eingestellt, sodass der Ladungsträger 60 das Anschlagelement 26 passiert hat und dann in Richtung auf die Entnahmeseite 18 in Förderrichtung 19 bewegt worden ist. Da aber der Entnahmevorgang für den Ladungsträger 34 unterbrochen worden ist, trifft der Ladungsträger 60 nicht auf den Entnahmeanschlag 20, sondern auf die hintere Begrenzung des Ladungsträgers 34, wobei das äußere Ende der Steuerfahne 22 zwischen der hinteren Begrenzung des Ladungsträgers 34 und der vorderen Begrenzung des Ladungsträgers 60 eingeklemmt und elastisch deformiert wird.

Wenn anschließenden der Entnahmevorgang für den Ladungsträger 34 wieder aufgenommen wird und dieser vollständig aus der Entnahmeseite 18 entnommen worden ist, so bewegt sich der Ladungsträger 60 bis zu dem Entnahmeanschlag 20 und die Steuerfahne 22 geht in ihren unverformten Zustand über, ohne dass es zu einer Beschädigung der Separiervorrichtung oder einer Betriebsstörung gekommen ist.

Ein weiterer Vorteil ergibt sich in einer Situation, wo zum Beispiel der Ladungsträger 34 bereits so weit aus der Entnahmeseite 18 entnommen worden ist, dass die Steuerfahne 22 beginnt zurückzuschwenken. Wenn dann der Gabelstapler entgegen der Förderrichtung 19 den Ladungsträger 34 wieder zurückfährt, wird hierdurch eine Kraft auf die Rückseite der Steuerfahne 22 ausgeübt, die aber aufgrund der losen mechanischen Kopplung zu der Vereinzelungsanschlageinrichtung 36 nicht zu einer Beschädigung der Separiervorrichtung führen kann, da es keinen entsprechenden Kraftpfad hierfür gibt.

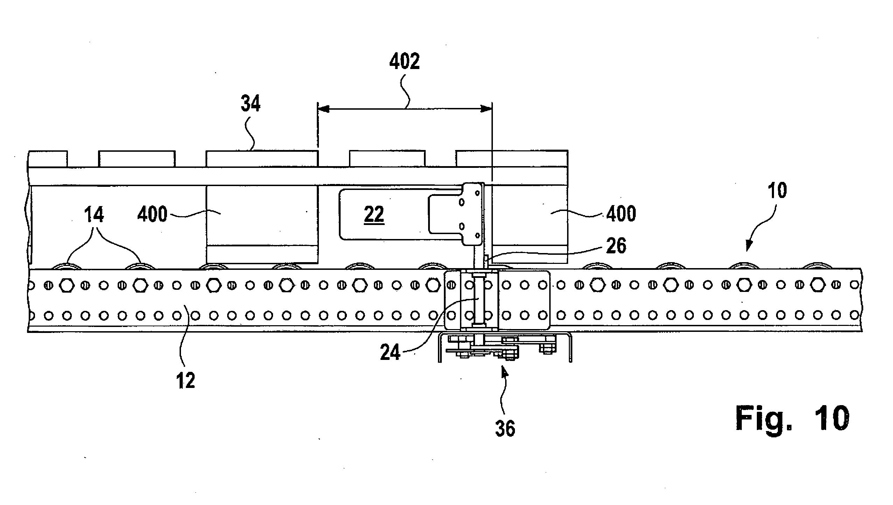

Das Durchlaufregal kann für einen Mischbetrieb mit kurzen und langen Ladungsträgern ausgebildet sein. Beispielsweise kann es sich bei dem Ladungsträger 34 um eine kurze Europalette mit einer Länge von 600 mm und bei dem Ladungsträger 60 um eine lange Europalette der doppelten Länge, das heißt, eine Länge von 1200 mm handeln. Der Aufnahmebereich der Separiervorrichtung, das heißt, der Abstand zwischen dem Entnahmeanschlag 20 und dem Anschlagelement 26, hat dann mindestens die Länge des langen Ladungsträgers 60, so dass dieser nach dem Passieren des Anschlagelements 26 dort aufgenommen werden kann. Vorzugsweise hat die Steuerfahne 22 eine Länge, die etwas größer ist als die Länge eines kurzen Ladungsträgers 34, beispielsweise eine Länge von 700 mm bis 750 mm, was einen Überlappungsbereich 62 (vergleiche Figuren 9 und 10) von 100 mm bis 150 mm ergibt. Unabhängig davon, ob sich ein kurzer Ladungsträger 34 oder ein langer Ladungsträger 60 in dem Aufnahmebereich befindet, wird also die Steuerfahne 22 in ihrer zweiten Stellung gehalten, was den Mischbetrieb ermöglicht.

Die Figur 7 zeigt eine schematische Ansicht einer Vereinzelungsanschlageinrichtung 36 mit Anschlagelement im Freigabezustand. Das Anschlagelement ist starr mit einem Bolzen 116 verbunden, wobei sich dieser aufgrund des Freigabezustands zwischen zwei Riegeln 100 bewegen kann. Der Bolzen 116 ist zwischen den beiden Riegeln 100 aufgenommen, kann sich jedoch nicht so weit hinter die Fläche 126 der Riegel 100 bewegen, dass der Bolzen 116 außer Eingriff der Riegel 100 geraten würde. Die Fläche 126 bildet also einen seitlichen Anschlag für den Bolzen.

Die beiden Riegel sind jeweils um einen Riegeldrehpunkt 120 drehbar gelagert. Die ersten Enden der Riegel weisen jeweils Führungselemente 118 auf, wobei es sich im Beispiel der Figur 7 um reibungsarm gelagerte Rollen handelt. Das zweite Ende der Riegel weist jeweils die abgeschrägten Flächen 126 auf ,welche "Backen" bilden.

Ferner ersichtlich in Figur 7 ist ein Auslöser 104. Der Auslöser 104 ist über eine Kulisse 108 und eine entsprechende Koppelstange 106, die diese Kulisse 108 aufweist, mit der in Figur 7 nicht ersichtlichen Steuerfahne gekoppelt. Die Führung des Auslösers 104 und der Kulisse 108 wird über eine zum Beispiel Schraubverbindung 110, welche einen "Kulissenstein" bildet, realisiert.

Der Auslöser 104 ist an einem Auslöserdrehpunkt 114 schwimmend gelagert und kann zwischen zwei verschiedenen Endstellungen geschwenkt werden. In der in Figur 7 gezeigten Stellung ist eine Drehbewegung entgegen des Uhrzeigersinns durch den Riegeldrehpunkt 120 blockiert, da sowohl Riegeldrehpunkt 120 als auch Auslöser 104 eine jeweilige gegenstückige Anschlagfläche 122 aufweisen.

Die Aussparung 112 des Auslösers dient dazu, um den Schwerpunkt des Auslösers vom Bereich 112 in Richtung der Anschlagfläche 122 zu verlagern. Dadurch kommt es zu keinem Verkanten des Auslösers, z.B. durch Verkippen bei seiner Betätigung.

Die schwimmende Lagerung am Auslöserdrehpunkt 117 dient dazu, einen Toleranzausgleich im Hinblick auf die Anschlagsfläche 122, 210, 208 und 304, sowie 306 zu schaffen. Diese Flächen werden jeweils weiter unten näher erläutert.

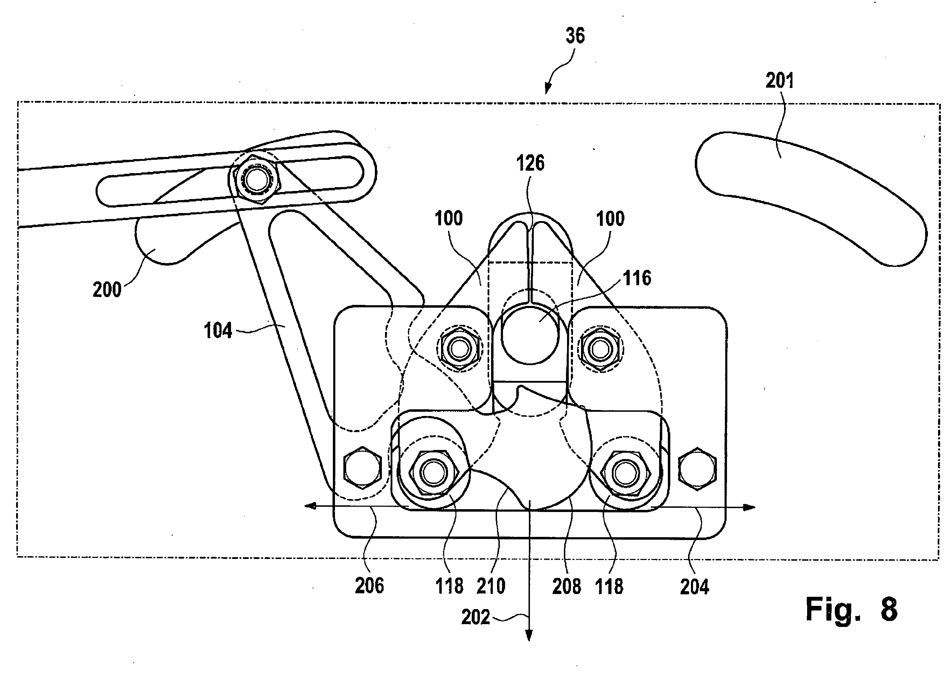

Der Auslöser 104 weist nun zunächst eine Auflagefläche 124 auf. Diese dient dazu, dem Bolzen 116 eine Auflagefläche zu bieten. "Schnappt" nämlich das Anschlagelement, wenn es belastungsfrei ist, aufgrund einer Rückstellfeder wieder zurück vom in Figur 7 gezeigten Freigabezustand in Richtung verriegeltem Anschlagzustand, so führt dies dazu, dass durch den Bolzen 116 eine Kraft auf die Fläche 124 ausgeübt wird. Dadurch wird die Fläche 124 in Figur 7 nach unten auf den Auslöser geschlagen und der Auslöser 104 rotiert im Uhrzeigersinn um den Auslöserdrehpunkt 117. Gleichzeitig wirkt aufgrund der Bewegung der Fläche 124 nach unten eine Kraft von der Fläche 210 auf die Führungselemente 118. Der entsprechende Zwischenzustand ist in Figur 8 gezeigt.

In Figur 8 hat sich aufgrund der zu der Figur 7 beschriebenen Krafteinwirkung des Bolzens 116 auf die Fläche 124 die Fläche 124 in Richtung 202 nach unten bewegt. Dadurch wurden aufgrund der Flächen 210 und 208 die Führungselemente 118 nach links und nach rechts in Richtungen 204 und 206 auseinander gedrängt. Dies führt zu einer Rotation der Riegel 100 um deren Riegeldrehpunkte 120. Dadurch kommt es zu einem Schließvorgang der Backen 126 der zweiten Enden der Riegel 100.

Es sei an dieser Stelle angemerkt, dass ein ungewollter Schließvorgang der Backen 126 aufgrund der beschriebenen Ausgestaltung der Vereinzelungsanschlageinrichtung 36 verhindert wird. Würden nämlich in Figur 7 die Backen 126 ein klein wenig aufeinander zubewegt werden, würden aufgrund der Kraft des Bolzens 116 in Richtung 202 die Backen 126 wieder auseinander gedrängt, wodurch also ein Übergang vom verriegelten Anschlagzustand des Anschlagelements in den Freigabezustand nicht behindert werden kann.

Ferner sind in Figur 8 Aussparungen 200, 201 der Vereinzelungsanschlageinrichtung 36 ersichtlich. Diese können zusätzlich zur Führung der Verbindung 110 zwischen Koppelstange 106 und Auslöser 104 verwendet werden. Dies bietet sich insbesondere dann an, wenn die Verbindung 110 eine wie in Figur 8 gezeigte Schraubverbindung ist, wobei auf der in Figur 8 nicht ersichtlichen Seite der Schraubverbindung ein Schraubkopf nach hinten wegsteht. Der Schraubkopf könnte dann in dieser Aussparung 200 geführt werden, so dass die Aussparung 200 eine zusätzliche Kulisse bildet.

Die in Figur 8 gezeigte Aussparung 201 ist optional und symmetrisch zur Aussparung 200 und kann dafür verwendet werden, um die Vereinzelungsanschlageinrichtung 36 an einer anderen Seite der Rollenbahn zu montieren. Es ist also unerheblich, an welcher Seite der Rollenbahn letztlich die Steuerfahne zum Einsatz kommt.

Wie ferner in Figur 8 erkannt werden kann, sichert die Kulisse zwischen Steuerfahne und Auslöser, dass unabhängig von der Stellung der Steuerfahne der Auslöser in der Vereinzelungsanschlageinrichtung rotiert werden kann. Selbst wenn also die Steuerfahne blockiert ist und nicht weiter bewegt werden kann, ist gesichert, dass unabhängig davon das Anschlagelement in seinen verriegelten Zustand übergehen kann.

Die Figur 9 zeigt den Zustand, in welchem sich das Anschlagelement in seinem verriegelten Anschlagzustand befindet. Der Auslöser ist nun so weit im Uhrzeigersinn um den Auslöserdrehpunkt 114 geschwenkt, bis der Auslöser mit seiner Anschlagsfläche 304 das linke Führungselement 118 umgreift. Die Achse des Führungselements 118, des Auslöserdrehpunkts 114 und der Unterkante des Anschlags 104 liegen damit in einer Ebene.

Wirkt nun auf das Anschlagelement eine Kraft (ein Staudruck) aufgrund sich stauender Paletten, wirkt dadurch wiederum eine hohe Kraft auf den Bolzen 116 in Richtung 300. Diese Kraft wird jedoch durch die Riegel 100 kompensiert, welche sich im geschlossenen Zustand befinden. Dabei wird die Kraft gleichmäßig auf die Fläche 302 der Riegel 100 verteilt. Die Riegel sind jedoch in der in Figur 9 gezeigten Stellung blockiert, da der Anschlag 304 das Führungselement 118 so weit umgreift, dass die über die Fläche 302 auf den Riegel 100 wirkende Kraft und damit das auf die Fläche 302 wirkende Drehmoment vollständig über die Fläche 302 und über den Anschlag 304 aufgenommen wird und vollständig durch den Auslöserdrehpunkt 114 kompensiert wird. Es ergibt sich damit eine direkte Kraftlinie zwischen Auslöserdrehpunkt 114, Führungselement 118 und Anschlag 304. In analoger Weise weist der Auslöser 104 einen Anschlag 306 für das Führungselement 118 auf, so dass sich eine direkte Kraftlinie zwischen Führungselement 118, Anschlag 306 und Auslöserdrehpunkt 114 ergibt. Insgesamt ist damit eine Bewegung der Riegel 100 um deren Drehpunkte 120 blockiert, ohne dass es hierzu eines Kraftaufwands beispielsweise über die Steuerfahne oder die Koppelstange 106 bedarf. Koppelstange 106 und Vereinzelungsanschlageinrichtung, insbesondere Führungselement 118 sind über die beschriebenen konstruktiven Merkmale vollständig voneinander entkoppelt.

Um nun wiederum den Übergang vom verriegelten Anschlagzustand der Figur 9 in den Freigabezustand der Figur 7 zu ermöglichen, genügt es, dass über die Steuerfahne an der Koppelstange 106 mit geringem Kraftaufwand kurz "gezogen" wird. Dadurch rotiert der Auslöser 104 um den Auslöserdrehpunkt 114 und die Führungselemente 118 überwinden den Punkt der Anschläge 304 und 306, welcher Kräftegleichgewicht zwischen den Drehmomenten der Führungselemente 118 und des Auslösers 104 gewährleistet. Aufgrund der leicht gebogenen Form (leichte Rundung) der Fläche 302 der Riegel 100 und der in Richtung 300 über den Bolzen 116 auf diese Fläche 302 wirkenden Kraft werden die Riegel 100 schlagartig auseinander getrieben. Dadurch schießt der Bolzen 116 in Richtung 300 und es kommt kurzzeitig zum Zwischenzustand, wie er in Figur 8 gezeigt ist. Der Endzustand ist dann wiederum mit Figur 7 erreicht. Nachdem der bezüglich Figur 9 beschriebene Totpunkt im Hinblick auf die Anschläge 304 und 306 überwunden wurde, drängen also die Führungselemente 118 über die Flächen 208 und 210 den Auslöser in Richtung 300 und rotieren den Auslöser um den Auslöserdrehpunkt 114 zurück in die in Figur 7 gezeigte Stellung. Auch hierzu ist insbesondere keinerlei Federkraft notwendig, um die Bewegung des Auslösers 104 von der in Figur 9 gezeigten Stellung in die in Figur 7 gezeigte Stellung zu bewerkstelligen.

Bei der Fläche 302 kann es sich anstatt einer Rundung auch um eine V-förmige Schräge handeln, wodurch die Kraft, mittels welcher die Riegel 100 auseinander gedrängt werden, erhöht wird.

Die Figur 10 zeigt eine Seitenansicht einer Rollenbahn 10 mit Rollen 14, die wiederum in einem Rahmen 12 gehaltert sind. Auf den Rollen 14 befindet sich eine Palette 34 in Querdurchlauf. Die Palette hat Füße 400, mittels welcher sie über die Rollen 14 gefördert wird. Ferner ersichtlich ist in Figur 10 die Steuerfahne 22, welche um ihre Achse 24 schwenken kann und über welche eine Verbindung mit der Vereinzelungsanschlageinrichtung 36 und dem Auslöser 26 gegeben ist.

Würde nun für die Länge der Fahne 22 eine Länge gewählt werden, welche beispielsweise einer Breite der Palette entspricht, so würde spätestens nach Überrollen des ersten Fußes 400 der Palette über das Anschlagelement 26 das Anschlagelement 26 wieder zurück in einen verriegelten Anschlagzustand zurückschnappen. Dies würde dazu führen, dass eine der hinteren Füße 400 der Palette 34 am Anschlagelement hängen bleiben würde.

Daher ist es vorteilhaft, im Falle eines Querdurchlaufs von Paletten die Länge der Fahne zwischen dem Fahnenende und der Drehachse so zu wählen, dass in einer geraden Seitenansicht auf die Palette der Abstand zwischen Achse 36 und Ende der Fahne 22 gerade so groß ist wie der Abstand 402 zwischen zwei Füßen der Palette 34. Vorzugsweise sollte der Abstand zwischen Achse 36 und Ende der Fahne 22 etwas kleiner sein als der Abstand 402, um eine Toleranz beim Schrägdurchlauf der Palette 34 zu kompensieren.

Durch das gewählte Maß ist gewährleistet, dass Füße 400 an der Seite der Palette ungehindert über das Anschlagelement geführt werden können und das Anschlagelement lediglich für nachfolgende Paletten 34 beim Querdurchlauf zur Vereinzelung der Paletten Verwendung findet.

Allgemein sei angemerkt, dass anstatt einer Steuerfahne 22 mit flächiger Auflage (rechteckige Auflage in Figur 10) auch grundsätzlich beispielsweise ein Stab, wie zum Beispiel ein Fiberglasstab zum Einsatz kommen kann.

### Bezugszeichenliste

- 10: Rollenbahn
- 12: Rahmen
- 14: Transportrollen
- 16: Aufgabeseite
- 18: Entnahmeseite
- 19: Förderrichtung
- 20: Entnahmeanschlag
- 22: Steuerfahne
- 24: Schwenkachse
- 26: Anschlagelement
- 28: Pfeilrichtung
- 30: Pfeilrichtung
- 34: Ladungsträger
- 60: Ladungsträger
- 100: Riegel
- 104: Auslöser
- 108: Aussparung
- 110: Kulissenstein
- 112: Aussparung
- 114: Auslösedrehpunkt
- 116: Bolzen
- 118: Führungselement
- 120: Riegeldrehpunkt
- 122: Anschlag
- 124: Fläche
- 126: Backen
- 200: Aussparung
- 201: Aussparung
- 202: Richtung
- 204: Richtung
- 206: Richtung
- 208: Fläche
- 210: Fläche
- 300: Richtung
- 302: Auflagefläche
- 304: Totpunktanschlag
- 400: Fuß
- 402: Abstand

## Patentansprüche

1. Separiervorrichtung für ein Durchlaufregal zur Separierung von von einer Aufgabeseite (16) zu einer Entnahmeseite (18) hin beförderten Ladungsträgern (34, 60) mit einer Steuerfahne (22), die durch einen sich in Förderrichtung (19) bewegenden Ladungsträger aus einer ersten Stellung in eine zweite Stellung verschwenkbar ist, und mit einer in der Förderrichtung stromaufwärts vor der Steuerfahne angeordneten Vereinzelungsanschlageinrichtung (36) mit einem Anschlagelement (26),
- wobei die Vereinzelungsanschlageinrichtung mit der Steuerfahne (22) mechanisch so über einen Auslöser (104) gekoppelt ist, dass sich im Falle dessen sich die Steuerfahne (22) in der zweiten Stellung befindet das Anschlagelement (26) in einem verriegelten Anschlagzustand befindet, in dem es sich über die Förderebene hinaus erstreckt,
- wobei die Vereinzelungsanschlageinrichtung mit der Steuerfahne (22) mechanisch ferner so über den Auslöser (104) gekoppelt ist dass sich im Falle dessen sich die Steuerfahne (22) in der ersten Stellung befindet das Anschlagelement (26) in einem Freigabezustand befindet, in dem es sich unter die Förderebene bewegen kann,
- wobei die Vereinzelungsanschlageinrichtung ( 36) einen um einen Riegel-Drehpunkt (120) drehbar gelagerten Riegel (100) aufweist, **dadurch gekennzeichnet, dass** der Riegel (100) ein erstes Ende und ein zweites Ende aufweist, wobei das erste Ende und das zweite Ende relativ zum Riegel-Drehpunkt (120) auf einander gegenüberliegenden Seiten des Riegels (100) liegen, wobei der Riegel (100) zwischen einer Verriegelungsposition zum Erhalt des verriegelten Anschlagzustands und einer Freigabeposition zum Erhalt des Freigabezustands um den Riegel-Drehpunkt (120) schwenkbar ist, wobei das zweite Ende des Riegels (100) so ausgebildet ist, dass in der Verriegelungsposition das zweite Ende des Riegels (100) eine Bewegung des Anschlagelements (26) blockiert und in der Freigabeposition das zweite Ende des Riegels (100) eine Bewegung des Anschlagselements freigibt,
- wobei der Auslöser (104) um einen Auslöser-Drehpunkt (114) drehbar an der Vereinzelungsanschlageinrichtung ( 36) so gelagert ist, dass durch den Auslöser (104) in der zweiten Stellung der Steuerfahne (22) das erste Ende des Riegels (100) gegen eine Drehbewegung des Riegels (100) blockiert ist,
- wobei der Auslöser (104) um den Auslöser-Drehpunkt (114) drehbar an der Vereinzelungsanschlageinrichtung (36) ferner so gelagert ist, dass in der ersten Stellung der Steuerfahne (22) das erste Ende des Riegels (100) für eine Drehbewegung des Riegels (100) freigegeben ist.

2. Separiervorrichtung nach Anspruch 1, wobei am Anschlagelement (26) ein Bolzen (116) angeordnet ist,
- wobei in dem Anschlagzustand die Blockierung der Bewegung des Anschlagelements (26) aus einer Blockierung der Bewegung des Bolzens (116) durch das zweite Ende des Riegels (100) resultiert und
- wobei in dem Freigabezustand die Freigabe der Bewegung des Anschlagelements (26) aus einer Freigabe der Bewegung des Bolzens (116) durch das zweite Ende resultiert.

3. Separiervorrichtung nach Anspruch 2, wobei der Bolzen (116) starr mit dem Anschlagelement (26) verbunden ist.

4. Separiervorrichtung nach einem der vorigen Ansprüche, wobei der Riegel (100) zumindest zweigeteilt ist mit einem ersten Riegelteil und einem zweiten Riegelteil, wobei das erste Riegelteil und das zweite Riegelteil jeweils um einen Riegel-Drehpunkt (120) drehbar gelagert sind und das erste und das zweite Ende aufweisen.

5. Separiervorrichtung nach einem der vorigen Ansprüche, wobei der Auslöser (104) einen ersten Anschlag (304) aufweist, wobei das erste Ende des ersten Riegelteils ein erstes Führungselement (118) aufweist, wobei der erste Anschlag (304) in dem verriegelten Anschlagzustand das Führungselement (118) teilweise umgreift.

6. Separiervorrichtung nach Anspruch 5, wobei in dem verriegelten Anschlagzustand der erste Anschlag das erste Führungselement (118) so weit umgreift, dass das erste Führungselement (118) und der erste Anschlag (304) einen Totpunkt bilden.

7. Separiervorrichtung nach einem der vorigen Ansprüche 5 oder 6, wobei der erste Anschlag (304) des Auslösers einen Fortsatz (210) aufweist, wobei der Fortsatz (210) so geformt ist, um bei Überführung des Anschlagelements (26) vom Freigabezustand in den verriegelten Anschlagzustand das erste Führungselement (118) von der Freigabeposition in die Anschlagposition zu drängen.

8. Separiervorrichtung nach einem der vorigen Ansprüche 2-7, wobei der Auslöser (104) eine Auflagefläche (124) für den Bolzen (116) aufweist, wobei die Auflagefläche (124) in dem Freigabezustand dem Bolzen (116) zugewandt ist.

9. Separiervorrichtung nach einem der vorigen Ansprüche, wobei die Vereinzelungsanschlageinrichtung (36) einen zweiten Anschlag (120) für den Auslöser (104) aufweist, wobei der zweite Anschlag (120) zur Begrenzung der Drehbewegung des Auslösers um den Auslöser-Drehpunkt (114) in der zweiten Stellung der Steuerfahne (22) ausgebildet ist.

10. Separiervorrichtung nach einem der vorigen Ansprüche 2-9, wobei das zweite Ende des Riegels (100) so ausgebildet ist, dass in der Freigabeposition das zweite Ende des Riegels (100) einen seitlichen Anschlag (126) für den Bolzen (116) bildet.

11. Separiervorrichtung nach einem der vorigen Ansprüche, wobei das erste Ende des zweiten Riegelteils ein zweites Führungselement (118) aufweist, wobei der Auslöser (104) eine Führungsfläche (208) aufweist, wobei die Führungsfläche (208) so geformt ist, um bei Überführung des Anschlagelements (26) vom Freigabezustand in den verriegelten Anschlagzustand das zweite Führungselement (118) von der Freigabeposition in die Anschlagposition drängen.

12. Separiervorrichtung nach Anspruch 11, wobei die Führungsfläche (208) und der Fortsatz (210) so geformt sind, um bei Überführung des Anschlagelements (26) vom Freigabezustand in den verriegelten Anschlagzustand das erste Führungselement (118) und das zweite Führungselement (118) gleichzeitig von der Freigabeposition in die Anschlagposition drängen, wobei das erste und das zweite Riegelteil symmetrisch zueinander geformt sind.

13. Separiervorrichtung nach einem der vorigen Ansprüche, wobei die Kopplung der Steuerfahne (22) über den Auslöser (104) eine Kulissenführung (108; 110) umfasst.

14. Separiervorrichtung nach Anspruch 13, wobei die Kopplung der Steuerfahne (22) über den Auslöser (104) eine Koppelstange (106) umfasst, wobei die Koppelstange (106) eine Aussparung (108) aufweist und wobei der Auslöser (104) einen Kulissenstein (110) aufweist, wobei die Kulissenführung durch die Aussparung (108) und den Kulissenstein (110) gebildet wird.

15. Separiervorrichtung nach einem der vorigen Ansprüche, wobei der Auslöser (104) an dem Auslöser-Drehpunkt (114) schwimmend gelagert ist.

16. Separiervorrichtung nach einem der vorigen Ansprüche, wobei die Schwenkachse (24) der Steuerfahne (22) im Wesentlichen senkrecht zu der Förderebene verläuft.

## Claims

1. A separating device for a carton flow rack for separating load carriers (34, 60) conveyed from a feed side (16) to a removal side (18), comprising a control tab (22), which is pivotable by means of a load carrier moving in the conveying direction (19) from a first position into a second position, and comprising a separating stopper (36) with a stop element (26) arranged downstream ahead of the control tab in the conveying direction,
- wherein the separating stopper is mechanically coupled to the control tab (22) via a trigger (104), such that, when the control tab (22) is in the second position, the stop element (26) is located in a locked stop state, in which said stop element extends beyond the conveying plane,
- wherein the separating stopper is also mechanically coupled to the control tab (22) via the trigger (104), such that, when the control tab (22) is in the first position, the stop element (26) is in a release position, in which it can move below the conveying plane,
- wherein the separating stopper (36) has a latch (100), which is mounted rotatably about a latch pivot point (120), **characterised in that** the latch (100) has a first end and a second end, wherein the first end and the second end are arranged on opposite sides of the latch (100) relative to the latch pivot point (120), wherein the latch (100) is pivotable about the latch pivot point (120) between a locking position in order to obtain the locked stop state and a release position in order to obtain the release state, wherein the second end of the latch (100) is formed such that the second end of the latch (100) blocks a movement of the stop element (26) in the locking position and the second end of the latch (100) releases a movement of the stop element in the release position,
- wherein the trigger (104) is mounted on the separating stopper (36) rotatably about a trigger pivot point (114) such that, due to the trigger (104), in the second position of the control tab (22) the first end of the latch (100) is blocked against a rotational movement of the latch (100),
- wherein the trigger (104) is also mounted rotatably on the separating stopper (36) such that, in the first position of the control tab (22) the first end of the latch (100) is released for a rotational movement of the latch (100).

2. The separating device according to Claim 1, wherein a pin (116) is arranged on the stop element (26),
- wherein, in the stop state, the blocking of the movement of the stop element (26) results from a blocking of the movement of the pin (116) by the second end of the latch (100), and
- wherein, in the release state, the release of the movement of the stop element (26) results from a release of the movement of the pin (116) by the second end.

3. The separating device according to Claim 2, wherein the pin (116) is rigidly connected to the stop element (26).

4. The separating device according to one of the preceding claims, wherein the latch (100) is at least divided into two with a first latch part and a second latch part, wherein the first latch part and the second latch part are each mounted rotatably about a respective latch pivot point (120) and have the first and the second end.

5. The separating device according to one of the preceding claims, wherein the trigger (104) has a first stop (304), wherein the first end of the first latch part has a first guide element (118), wherein the first stop (304) engages around the guide element (118) in part in the locked stop state.

6. The separating device according to Claim 5, wherein, in the locked stop state, the first stop engages around the first guide element (118) to such an extent that the first guide element (118) and the first stop (304) form a dead centre.

7. The separating device according to one of preceding Claims 5 or 6, wherein the first stop (304) of the trigger has an extension (210), wherein the extension (210) is formed so as to force the first guide element (118) from the release position into the stop position when the stop element (26) transitions from the release state into the locked stop state.

8. The separating device according to one of preceding Claims 2-7, wherein the trigger (104) has a support surface (124) for the pin (116), wherein the support surface (124) faces the pin (116) in the release state.

9. The separating device according to one of the preceding claims, wherein the separating stopper (36) has a second stop (120) for the trigger (104), wherein the second stop (120) is configured to delimit the rotational movement of the trigger about the trigger [pivot point (114) in the second position of the control tab (22).

10. The separating device according to one of preceding claims 2-9, wherein the second end of the latch (100) is configured such that the second end of the latch (100) forms a lateral stop (126) for the pin (116) in the release position.

11. The separating device according to one of the preceding claims, wherein the first end of the second latch part has a second guide element (118), wherein the trigger (104) has a guide surface (208), wherein the guide surface (208) is formed so as to force the second guide element (118) from the release position into the stop position when the stop element (26) transitions from the release state into the locked stop state.

12. The separating device according to Claim 11, wherein the guide surface (208) and the extension (210) are formed so as to force the first guide element (118) and the second guide element (118) simultaneously from the release position into the stop position when the stop element (26) transitions from the release state into the locked stop state, wherein the first and the second latch part are formed symmetrically with respect to one another.

13. The separating device according to one of the preceding claims, wherein the coupling of the control tab (22) via the trigger (104) comprises a sliding-block guide (108; 110).

14. The separating device according to Claim 13, wherein the coupling of the control tab (22) via the trigger (104) comprises a coupling rod (106), wherein the coupling rod (106) has a recess (108), and wherein the trigger (104) has a sliding block (110), wherein the sliding-block guide is formed by the recess (108) and the sliding block (110).

15. The separating device according to one of the preceding claims, wherein the trigger (104) is mounted floatingly on the trigger pivot point (114).

16. The separating device according to one of the preceding claims, wherein the pivot axis (24) of the control tab (22) runs substantially perpendicularly to the conveying plane.

## Revendications

1. Dispositif de séparation pour un rayonnage dynamique, pour la séparation de supports de charge (34, 60) déplacés d'un côté chargement (16) vers un côté retrait (18), avec un drapeau de commande (22) susceptible de pivoter d'une première position vers une deuxième position au moyen d'un support de charge circulant dans la direction de déplacement (19), et avec un dispositif de butée de séparation (36) agencé en amont du drapeau de commande dans la direction de déplacement, avec un élément de butée (26),
- dans lequel le dispositif de butée de séparation est accouplé mécaniquement avec le drapeau de commande (22) par le biais d'un déclencheur (104), de manière à ce que lorsque le drapeau de commande (22) se trouve dans la deuxième position, l'élément de butée (26) se trouve dans un état de butée verrouillé, dans lequel il s'étend au-delà du plan de déplacement,
- dans lequel le dispositif de butée de séparation est accouplé mécaniquement avec le drapeau de commande (22) par le biais du déclencheur (104) de manière à ce que lorsque le drapeau de commande (22) se trouve dans la première position, l'élément de butée (26) se trouve dans un état de libération, dans lequel il peut se déplacer sous le plan de déplacement,
- dans lequel le dispositif de butée de séparation (36) comporte un verrou (100) monté de façon rotative autour d'un point de rotation de verrou (120), **caractérisé en ce que** le verrou (100) comporte une première extrémité et une deuxième extrémité, la première extrémité et la deuxième extrémité se trouvant sur des côtés opposés du verrou (100) par rapport au point de rotation de verrou (120), le verrou (140) pouvant pivoter autour du point de rotation de verrou (120), entre une position de verrouillage pour atteindre l'état de butée verrouillé et une position de libération pour atteindre l'état de libération, la deuxième extrémité du verrou (100) étant conçue de manière à ce que dans la position de verrouillage, la deuxième extrémité du verrou (100) bloque un mouvement de l'élément de butée (26), et à ce que dans la position de libération, la deuxième extrémité du verrou (100) libère un mouvement de l'élément de butée,
- dans lequel le déclencheur (104) est monté de façon rotative autour d'un point de rotation de déclencheur (114) sur le dispositif de butée de séparation (36), de manière à bloquer la première extrémité du verrou (100) contre un mouvement de rotation du verrou (100), au moyen du déclencheur (104), dans la deuxième position du drapeau de commande (22),
- dans lequel le déclencheur (104) est en outre monté de façon rotative autour du point de rotation de déclencheur (114) sur le dispositif de butée de séparation (36), de manière à ce que dans la première position du drapeau de commande (22), la première extrémité du verrou (100) est libérée pour un mouvement de rotation du verrou (100).

2. Dispositif de séparation selon la revendication 1, dans lequel un boulon (116) est disposé sur l'élément de butée (26),
- dans lequel, dans l'état de butée, le blocage du mouvement de l'élément de butée (26) résulte d'un blocage du mouvement du boulon (116) par la deuxième extrémité du verrou (100), et
- dans lequel, dans l'état de libération, la libération du mouvement de l'élément de butée (26) résulte d'une libération du mouvement du boulon (116) par la deuxième extrémité.

3. Dispositif de séparation selon la revendication 2, dans lequel le boulon (116) est relié fixement à l'élément de butée (26).

4. Dispositif de séparation selon l'une des revendications précédentes, dans lequel le verrou (100) est divisé en au moins deux parties, avec une première partie de verrou et une deuxième partie de verrou, la première partie de verrou et la deuxième partie de verrou étant respectivement montées de façon rotative autour d'un point de rotation de verrou (120) et comportant la première et la deuxième extrémité.

5. Dispositif de séparation selon l'une des revendications précédentes, dans lequel le déclencheur (104) comporte une première butée (304), la première extrémité de la première partie de verrou comportant un premier élément de guidage (118), la première butée (304) entourant partiellement l'élément de guidage (118) dans l'état de butée verrouillé.

6. Dispositif de séparation selon la revendication 5, dans lequel, dans l'état de butée verrouillé, la première butée entoure le premier élément de guidage (118) jusqu'au point où le premier élément de guidage (118) et la première butée (304) forment un point mort.

7. Dispositif de séparation selon l'une des revendications précédentes 5 ou 6, dans lequel la première butée (304) du déclencheur comporte un prolongement (210), le prolongement (210) étant formé de manière à pousser le premier élément de guidage (118) de la position de libération vers la position de butée lors du passage de l'élément de butée (26) de l'état de libération à l'état de butée verrouillé.

8. Dispositif de séparation selon l'une des revendications précédentes 2-7, dans lequel le déclencheur (104) comporte une surface d'appui (124) pour le boulon (116), la surface d'appui (124) étant tournée vers le boulon (116) dans l'état de libération.

9. Dispositif de séparation selon l'une des revendications précédentes, dans lequel le dispositif de butée de séparation (36) comporte une deuxième butée (120) pour le déclencheur (104), la deuxième butée (120) étant conçue pour limiter le mouvement de rotation du déclencheur autour du point de rotation de déclencheur (114) dans la deuxième position du drapeau de commande (22).

10. Dispositif de séparation selon l'une des revendications 2-9, dans lequel la deuxième extrémité du verrou (100) est conçue de manière à ce que dans la position de libération, la deuxième extrémité du verrou (100) forme une butée latérale (120) pour le boulon (116).

11. Dispositif de séparation selon l'une des revendications précédentes, dans lequel la première extrémité de la deuxième partie de verrou comporte un deuxième élément de guidage (118), le déclencheur (104) comportant une surface de guidage (208), la surface de guidage (208) étant formée de manière à pousser le deuxième élément de guidage (118) de la position de libération vers la position de butée lors du passage de l'élément de butée (26) de l'état de libération à l'état de butée verrouillé.

12. Dispositif de séparation selon la revendication 11, dans lequel la surface de guidage (208) et le prolongement (210) sont formés de manière à pousser le premier élément de guidage (118) et le deuxième élément de guidage (118) simultanément de la position de libération vers la position de butée lors du passage de l'élément de butée (26) de l'état de libération à l'état de butée verrouillé, la première et la deuxième partie de butée étant formées symétriquement l'une par rapport à l'autre.

13. Dispositif de séparation selon l'une des revendications précédentes, dans lequel l'accouplement du drapeau de commande (22) par le biais du déclencheur (104) comprend un guidage à coulisse (108 ; 110).

14. Dispositif de séparation selon la revendication 13, dans lequel l'accouplement du drapeau de commande (22) par le biais du déclencheur (104) comprend une barre d'accouplement (106), la barre d'accouplement (106) comportant un évidement (108) et le déclencheur (104) comportant un coulisseau (110), le guidage à coulisse étant formé par l'évidement (108) et le coulisseau (110).

15. Dispositif de séparation selon l'une des revendications précédentes, dans lequel le déclencheur (104) est monté de façon flottante sur le point de rotation de déclencheur (114).

16. Dispositif de séparation selon l'une des revendications précédentes, dans lequel l'axe de pivotement (24) du drapeau de commande (22) s'étend essentiellement perpendiculairement au plan de déplacement.
